Europäisches Patentamt

European Patent Office

Office européen des brevets

(19)

(11) EP 0 869 374 A1

(12) ## DEMANDE DE BREVET EUROPEEN

(43) Date de publication:
**07.10.1998 Bulletin 1998/41**

(51) Int Cl.$^6$: **G01S 17/32**, G01S 17/58

(21) Numéro de dépôt: **98400753.4**

(22) Date de dépôt: **31.03.1998**

(84) Etats contractants désignés:
**AT BE CH DE DK ES FI FR GB GR IE IT LI LU MC NL PT SE**
Etats d'extension désignés:
**AL LT LV MK RO SI**

(30) Priorité: **02.04.1997 FR 9703996**

(71) Demandeurs:
• **COMMISSARIAT A L'ENERGIE ATOMIQUE**
**75015 Paris (FR)**

• **COMPAGNIE GENERALE DES MATIERES NUCLEAIRES**
**F-78140 Velizy Villacoublay (FR)**

(72) Inventeur: **Nerin, Philippe**
**30114 Nages (FR)**

(74) Mandataire: **Moutard, Pascal Jean**
**c/o Brevatome,**
**25, rue de Ponthieu**
**75008 Paris (FR)**

(54) **Vélocimètre et télémètre laser utilisant une detection cohérente**

(57)    L'invention a pour objet un dispositif de vélocimétrie et de télémétrie laser, à détection cohérente, comportant :

- un microlaser(10) à émission continue, comportant un milieu actif laser (10) et une cavité microlaser (16, 18),
- des moyens (20, 22, 24) pour moduler une fréquence optique d'un faisceau émis par le microlaser,
- des moyens (28) pour délivrer un signal dépendant :

* d'une part de la fréquence Doppler $F_D = \frac{2V}{\lambda}$, où $\lambda$ est la longueur d'onde d'émission du microlaser et V la vitesse d'une cible (2) à détecter,
* d'autre part d'une fréquence de modulation $F\tau$ provoquée par l'interférence, dans la cavité, de l'oscillation laser modulée en fréquence et du signal provenant d'une cible (2) placée à la distance Z.

FIG. 1

## Description

<u>Domaine technique</u>

L'invention concerne un dispositif optique utilisant une détection cohérente, appliqué en particulier à la vélocimétrie et à la télémétrie laser. D'autres applications de l'invention sont par exemple l'analyse chimique de constituants gazeux, l'analyse de champs de vitesse, la métrologie sans contact, l'imagerie laser, et l'instrumentation médicale.

<u>Etat de la technique</u>

Aux longueurs d'onde optiques, la détection cohérente se heurte à divers problèmes, en particulier aux problèmes de l'adaptation des champs sur le détecteur ("phase matching" et "amplitude matching"), et de fluctuations d'intensité et de phase du signal optique causées par l'interaction du faisceau avec des milieux désordonnés.

Pour résoudre ces deux premiers problèmes diverses solutions sont connues.

Ainsi, pour faire interférer de façon optimale les champs sur le détecteur, diverses conditions ont été établies dans les articles de A.E. Siegman intitulé "The antenna properties of optical heterodyne receivers", paru dans Applied Optics, vol. 5, n° 10, Oct. 1966, pp. 1588-1594, de S.C. Cohen, intitulé "Heterodyne detection : phase front alignement, beam spot size, and detector uniformity", paru dans Applied Optics, vol 14, n° 8, August 1975, pp. 1953-1959, et de St. Fowler et al., intitulé "Analysis of heterodyne efficiency for coherent laser radars", paru dans SPIE, vol. 1936, 1993, pp. 137-146. En particulier, les tolérances d'alignement sont donnés par le théorème de Siegman dans l'article de cet auteur cité ci-dessus :

$$A_R\Omega_R=\lambda^2 \tag{1}$$

$A_R$ est la surface équivalente de réception et $\Omega_R$ l'angle solide de détection. En général, la relation précédente est vérifiée pour des valeurs de $\Omega_R$ extrêmement faibles. Il en découle des tolérances d'alignement particulièrement serrées qui expliquent, en partie, les difficultés de mise en oeuvre de la détection cohérente aux courtes longueurs d'ondes.

Pour contourner les problèmes d'alignement, diverses techniques ont été proposées dans les brevets EP-164 181, US-5 114 226 et US-4 611 912.

Dans EP-164 181, on utilise un dispositif à fibres optiques et un coupleur pour réaliser le mélange des deux faisceaux. Dans US-5 114 226, on met en oeuvre une forme modifiée de l'interféromètre de Michelson, comportant un cataphote, un cube polariseur et une lame $\lambda/4$. Dans US-4 611 912, un interféromètre comportant un seul bras de mesure est réalisé en introduisant une lame partiellement réfléchissante dans le faisceau de mesure.

Ces montages complexes ont permis de réaliser des dispositifs industriels qui demeurent fragiles, onéreux et ayant des dimensions incompatibles avec une approche microsystème pour une fabrication à grande échelle, voir collective.

Pour minimiser les effets du "speckle", diverses approches ont été proposées. Le théorème de Van Cittert Zernike fournit un critère pour dimensionner la pupille de réception en exprimant le rayon de cohérence $\rho c$, au niveau de la pupille, en fonction de la longueur d'onde $\lambda$ et du diamètre apparent $\theta_S$ du spot laser sur la cible :

$$\rho_c = \frac{\lambda}{\theta_S} \tag{2}$$

Cette formule indique que les conditions optimales de détection sont obtenues lorsque la pupille d'émission et de réception ont même dimension et lorsque le faisceau est focalisé sur la cible. Cette approche a été privilégiée dans les documents EP-164 181 et US-5 114 226 : la distance de focalisation est figée par construction, ce qui confère au dispositif une profondeur de champ de quelques mètres autour du point de focalisation. Pour augmenter la profondeur de champ, une alternative est d'utiliser un système à focalisation dynamique. Cette dernière approche est pénalisante pour deux raisons : la faible cadence des mesures et la complexité du dispositif. Un filtrage par mode peut être obtenu en utilisant des fibres monomodes mais les difficultés de couplage constituent un problème majeur. Dans US-4 611 912, le faisceau de mesure est collimaté et un filtrage spatial est utilisé au plan focal de l'optique de réception. Cette technique est difficile à mettre en oeuvre : la mise en place d'un diaphragme de très faible dimension, environ 10 $\mu$m, au foyer de l'optique de réception, n'est pas aisée et atténue de façon considérable le signal.

Une manière de résoudre les problèmes d'alignement consiste à utiliser le laser à la fois comme émetteur et comme récepteur de lumière.

Ainsi, grâce au principe de retour inverse de la lumière, les faisceaux d'émission et de mesure sont nécessairement alignés.

Ce principe de détection est connu sous le nom de "Backscatter-modulated laser" ou sous la désignation de "Self-Mixing". On peut se reporter à ce sujet à l'article de P.J. de Groot et al. intitulé "Ranging and velocity signal generation in a backscatter-modulated laser diode" paru dans Applied Optics, vol. 27, n° 21, 1988, pages 4475-4480.

Ce principe de détection utilise diverses propriétés physiques du milieu amplificateur pour réaliser un moyen efficace de détection. On peut de façon simplifiée résumer le processus physique de la manière suivante : lorsqu'une infime partie de lumière émise par le laser retourne dans celui-ci après réflexion ou diffusion sur une cible en mouvement, une modulation de l'intensité du laser est observée. La modulation d'intensité est due à des effets non-linéaires présents dans le milieu amplificateur, tels que, par exemple, les effets de saturation. La modulation d'intensité comporte la fréquence Doppler caractéristique de la cible en déplacement. Le traitement approprié du signal émis par un détecteur mesurant la modulation d'intensité permet ainsi de remonter à la vitesse ou au déplacement de la cible qui intercepte le faisceau laser.

Le document US-4 928 152 montre un dispositif mettant en oeuvre le principe de la détection autodyne.

Ce dispositif comporte une diode laser. Un problème de ce type de dispositif est que lorsque la cible renvoie trop de lumière dans la cavité d'une diode laser, des instabilités importantes d'intensité rendent la mesure de la modulation d'intensité impossible.

Les instabilités sont notamment dues à un couplage trop important de la cavité de la diode laser avec la cible.

Une autre cause de l'instabilité est le gain élevé dans la cavité des diodes laser : celui-ci est de l'ordre de 100 cm$^{-1}$ pour des diodes lasers communément disponibles dans le commerce.

Une troisième cause de l'instabilité des diodes laser est le couplage non-linéaire des électrons et des photons. Ce couplage est caractérisé par un coefficient $\alpha$ qui peut être compris comme une mesure de non-linéarité du laser. Le coefficient $\alpha$, proportionnel à la dérivée partielle de l'indice n du milieu actif par rapport au nombre N d'inversion de population dans le laser, est de l'ordre de 3 à 7 pour les diodes laser communément disponibles dans le commerce.

Les phénomènes de non-linéarité et d'instabilité des diodes laser sont décrits plus en détail dans l'article de K. Otsuka intitulé "Non-linear phenomena in semiconductor lasers", SPIE, Vol. 1497, pages 432-443.

Un autre inconvénient de ce type de détection, utilisant une diode laser, provient de ce que la modulation d'intensité est significative lorsque la diode fonctionne près du seuil. Or, près du seuil, la puissance laser est minimale. Aussi, l'utilisation d'une diode laser ne permet pas de mesurer des distances trop importantes (supérieures à 10 m). Un autre point limitatif d'une diode laser provient de sa longueur de cohérence. On sait en effet que pour réaliser des interférences de bonne qualité, on utilise une longueur de cohérence égale, de préférence, à plusieurs ordres de grandeur de la distance à mesurer. Or, il s'avère que la longueur de cohérence des diodes lasers commerciales ordinaires dépassent rarement 10 m, ce qui limite pratiquement les portées des télémètres mettant en oeuvre toute forme de détection cohérente.

Un autre inconvénient du mode de détection utilisant une diode laser provient des difficultés de couplage, dans la cavité de la diode laser, du signal rétrodiffusé par la cible.

L'article de K. Otsuka et al, intitulé "Ultrahigh sensitivity laser Doppler velocimetry with a microchip solid-state laser", Applied Optics, Fev. 1994, vol. 33, n° 6 permet de réaliser des mesures précises de vitesse en utilisant un laser de type "microchip" (microlaser). L'utilisation de ce type de laser résout les problèmes d'instabilité inhérents à l'usage des diodes lasers. En effet dans les microlasers, le miroir de sortie a une réflectivité élevée, de l'ordre de 98%, le gain présent dans la cavité laser est faible, de l'ordre de 0,1 cm$^{-1}$, et le coefficient $\alpha$ est pratiquement nul.

Le principal inconvénient des dispositifs à microlaser provient du fait que la modulation d'intensité n'est significative que lorsque la fréquence Doppler est proche de la fréquence de relaxation $F_R$ du laser.

La fréquence de relaxation $F_R$ du laser est définie par la relation suivante :

$$F_R = \frac{1}{2\pi} \sqrt{\frac{r\text{-}1}{\tau_P \tau_f}}$$

où $\tau_p$ est la durée de vie des photons dans la cavité laser, où $\tau_f$ est la durée de vie de la transition laser et où r est un paramètre du pompage de la cavité laser. Ainsi, pour effectuer une mesure de vitesse, la fréquence de relaxation doit être sans cesse ajustée en fonction de la vitesse de la cible. Certains auteurs proposent d'ajuster le coefficient de pompage r de façon à accorder la fréquence de relaxation du laser à la fréquence Doppler correspondant au mouvement de la cible. Ces dispositions entraînement une grande complexité des circuits électroniques associés au vélocimètre et ne facilitent pas les mesures.

Enfin, une limitation des dispositifs exposés ci-dessus est que pratiquement aucun ne permet de mesurer à la fois la vitesse et la distance d'un objet, c'est-à-dire ne peut fonctionner à la fois comme vélocimètre et comme télémètre.

La présente invention a par conséquent pour but de proposer un dispositif ne présentant pas les limitations et les contraintes évoquées ci-dessus.

Un but est en particulier de proposer un vélocimètre et télémètre ne présentant pas d'instabilité.

Un autre but est de proposer un vélocimètre et télémètre capable de mesurer directement la vitesse d'une cible dans une large gamme de vitesses sans ajuster le paramètre de pompage.

Un but est encore de proposer un vélocimètre et télémètre ne posant pas de problèmes d'alignement des faisceaux d'émission et de mesure.

Un autre but est de proposer un vélocimètre et télémètre peu sensibles à un éventuel défaut de cohérence du faisceau de mesure.

Un but de l'invention est aussi de proposer un vélocimètre et télémètre ne présentant pas de problème de diaphonie.

Un but est enfin de proposer un vélocimètre et télémètre d'une conception simple et peu coûteuse.

Exposé de l'invention

La présente invention a pour objet un vélocimètre et un télémètre laser, à détection cohérente, comportant :

- un microlaser à émission continue, comportant un milieu actif laser et une cavité microlaser,
- des moyens pour moduler une fréquence optique d'un faisceau émis par le microlaser,
- des moyens pour délivrer un signal dépendant :

* d'une part de la fréquence Doppler $F_D = \frac{2v}{\lambda}$, où $\lambda$ est la longueur d'onde d'émission du microlaser et $v$ la vitesse d'une cible à détecter,
* d'autre part d'une fréquence de modulation $F\tau$ provoquée par l'interférence, dans la cavité, de l'oscillation laser modulée en fréquence et d'un signal de mesure, ou signal obtenu par réflexion ou diffusion sur une cible placée à une certaine distance.

L'invention a également pour objet un dispositif de vélocimétrie et de télémétrie , du type à détection cohérente, comportant :

- un microlaser à émission continue,
- des moyens de modulation de la fréquence optique d'un faisceau émis par le microlaser,
- des moyens pour transmettre le faisceau émis par le microlaser en direction d'une cible, pour recevoir un signal de mesure en provenance de la cible et pour transmettre ce signal de mesure vers le milieu actif laser,
- des moyens de détection d'un signal d'interférence entre l'oscillation laser dans la cavité et le signal de mesure, amplifié dans le milieu actif laser, et du faisceau de référence.

Des moyens peuvent en outre être prévus pour prélever, sur le faisceau laser émis par le microlaser, un faisceau de référence.

L'invention a également pour objet un dispositif de vélocimétrie et de télémétrie du type à détection cohérente comportant :

- un microlaser à émission continue avec une première et une deuxième faces d'émission opposées aptes à émettre respectivement un premier et un deuxième faisceaux,
- des moyens pour moduler la fréquence optique des premier et deuxième faisceaux,
- des moyens pour transmettre le premier faisceau émis par le microlaser en direction d'une cible, pour recevoir un signal de mesure en provenance de la cible et pour transmettre ce signal de mesure vers le milieu actif laser,
- des moyens pour détecter un signal résultant de l'interférence entre le signal de mesure et l'oscillation laser dans la cavité.

Les microlasers ont une structure constituée en un empilement de multicouches. Le milieu actif laser est constitué par un matériau de faible épaisseur, comprise par exemple entre 150 et 1000 $\mu$m, et de petites dimensions (quelques mm$^2$), sur lequel des miroirs diélectriques de cavité peuvent être directement déposés. Le milieu actif laser peut être pompé par une diode laser, par exemple III-V, qui est soit directement hybridée sur le microlaser, soit couplée à ce dernier par une fibre optique. Les microlasers peuvent être fabriqués collectivement, en utilisant les moyens de la micro-électronique. Ils ont en général une émission continue de quelques dizaines de milliwatts de puissance, ou bien ils peuvent être déclenchés, de manière passive ou active.

Le microlaser utilisé dans le vélocimètre/télémètre selon l'invention se distingue par conséquent d'une diode laser dont le milieu actif est semiconducteur, et qui est pompée électriquement.

Le vélocimètre selon l'invention est du type autodyne, ou à détection cohérente : le microlaser émet un premier faisceau de lumière vers une cible, et reçoit la lumière réémise, c'est-à-dire réfléchie ou diffusée par la cible. Cette lumière, par le principe du retour inverse, traverse les mêmes moyens optiques qui servent à envoyer le premier faisceau d'émission sur la cible.

Ainsi, il n'y a pas de désalignement entre la lumière émise du premier faisceau et la lumière de mesure renvoyée par la cible. Il est par conséquent possible d'effectuer des mesures avec un rayonnement de petite longueur d'onde.

L'interférence entre la lumière du faisceau d'émission et la lumière envoyée par la cible a lieu dans le microlaser (principe de la détection autodyne). Ce principe ne nécessite qu'une quantité très faible de lumière et permet donc de fonctionner avec des faisceaux de faible intensité, compatibles avec les normes de sécurité oculaire de l'utilisateur.

Le fait de réaliser un couplage dans la cavité microlaser permet de réduire la pupille d'entrée du système de réception. En effet, c'est le signal de retour qui rentre dans la zone où la cavité Fabry-Pérot a été créée qui bénéficie du phénomène. Il s'agit de la zone où le guide thermique a été créé par le faisceau de pompe, donc sur la longueur du microlaser et sur un diamètre d'environ 100µm. Aucun signal ne bénéficiera du phénomène en dehors de cette zone, d'où une pupille réduite, ce qui permet de réaliser des systèmes très compacts avec des performances équivalentes, voire supérieures à des dispositifs avec une pupille comprise entre 30 et 50 mm.

Le microlaser a également un rôle de filtrage spatial de la lumière provenant de la cible. En effet, le mode du laser constitue un filtre spatial qui rejette la lumière non cohérente en provenance de la cible. Le filtrage spatial fourni par le microlaser est lié en particulier à la forme du faisceau de pompage émis par les moyens de pompage du microlaser. Ainsi, le microlaser permet d'éviter les problèmes de cohérence entre le faisceau d'émission et la lumière renvoyée par la cible.

Le dispositif selon l'invention diffère de la télémétrie impulsionnelle en ce sens que le microlaser mis en oeuvre émet une onde continue, modulée en fréquence. De même, l'invention diffère de la télémétrie par comparaison de phase, en ce sens que le faisceau émis par le microlaser n'est pas modulé en amplitude, comme cela est réalisé par exemple dans le document FR-2 706 602, pour lequel une mesure de phase est réalisée entre un signal périodique émis vers la cible et le signal rétrodiffusé par celle-ci.

Le dispositif selon l'invention permet de réaliser une mesure simultanée de la vitesse et de la distance d'une cible, dans une large gamme de vitesses et de distances, et sans avoir à ajuster un paramètre de pompage.

L'invention concerne donc un dispositif de télémétrie et de vélocimétrie laser qui solutionne les problèmes d'adaptation des champs sur le détecteur, et de fluctuations d'intensité et de phase du signal optique.

Du fait de l'utilisation d'un microlaser, le dispositif selon l'invention est peu sensible à un éventuel défaut de cohérence du faisceau de mesure.

Enfin, le dispositif selon l'invention, selon le troisième mode de réalisation exposé ci-dessus, permet d'éviter les problèmes de diaphonie.

Dans tous les cas, la cavité microlaser peut être stable : un des deux miroirs de la cavité est alors un miroir concave.

Les moyens de modulation de la fréquence optique du faisceau laser peuvent comporter soit un élément électro-optique, soit un élément piézoélectrique. Cet élément se voit appliquer une variation de tension qui fait varier son indice optique, et donc l'indice optique de la cavité qui le contient.

Enfin, le dispositif peut être muni de moyens de traitement pour déterminer les grandeurs caractéristiques de la vitesse et de la position d'une cible.

Brève description des figures

De toute façon, les caractéristiques et avantages de l'invention apparaîtront mieux à la lumière de la description qui va suivre. Cette description porte sur les exemples de réalisation, donnés à titre explicatif et non limitatif, en se référant à des dessins annexés sur lesquels :

- la figure 1 représente un premier mode de réalisation de l'invention,
- les figures 2A à 2C sont des exemples de modulation de la fréquence optique,
- la figure 3 représente un deuxième mode de réalisation de l'invention.

Description détaillée de modes de réalisation de l'invention

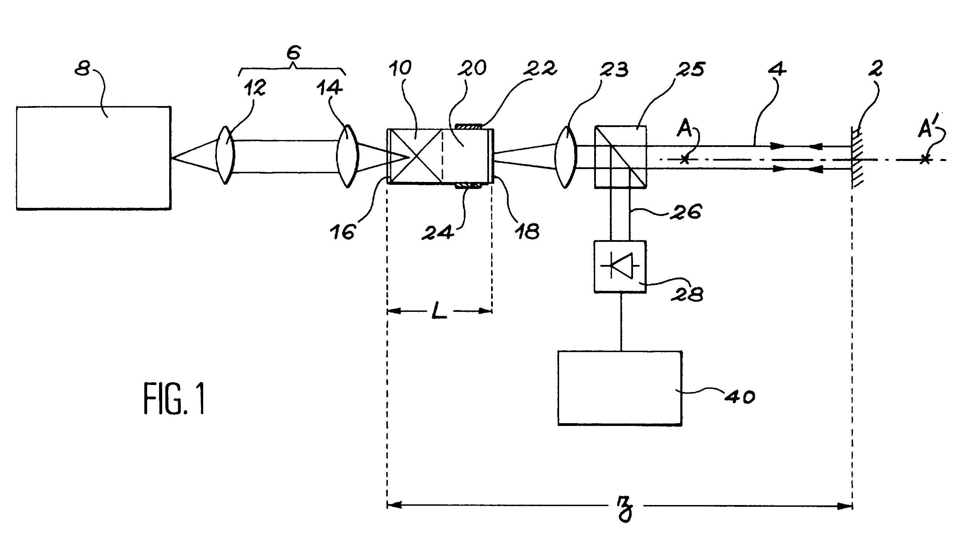

Un premier mode de réalisation de l'invention va être donné en liaison avec la figure 1.

Celle-ci représente un dispositif de télémétrie et de vélocimétrie, qui permet de mesurer à la fois la projection V du vecteur vitesse, sur l'axe optique AA', d'une cible 2 de coefficient de réflexion $r_{2ext}$, et la distance Z entre cette cible et le dispositif. La cible intercepte un faisceau laser continu 4, dont l'émission est modulée en fréquence.

Le dispositif comporte en fait deux sous-ensembles. Le premier sous-ensemble constitue la partie émission, le second sous-ensemble constitue la partie réception.

Le sous-ensemble de l'émission comprend :

- un moyen optique 8 pour réaliser le pompage d'un matériau laser amplificateur 10,
- un ensemble 12, 14 constituant une optique de collimation et de focalisation du faisceau émis par les moyens de pompage 8 ; cet ensemble 12, 14 peut constituer une seule et même pièce : par exemple une lentille GRIN qui assure les fonctions de collimation et de focalisation,
- le milieu amplificateur laser 10, inséré dans une cavité Fabry-Pérot délimité par un miroir d'entrée 16 (de réflectivité $r_1$ à la longueur d'onde $\lambda_L$ du microlaser) et un miroir de sortie 18 (de réflectivité $r_2$ à $\lambda_L$), la distance entre les deux miroirs étant notée L,
- des moyens de modulation de la fréquence d'émission du laser : sur la figure 1, ces moyens sont constitués par un élément électro-optique 20, situé entre deux électrodes 22, 24 auxquelles peut être appliquée une tension de commande, à l'aide de moyens non représentés sur la figure,
- des moyens optiques 23 de collimation du faisceau laser émis,
- des moyens 25 (par exemple, un séparateur de faisceau) pour prélever un faisceau de référence 26 sur le faisceau émis 4, et l'envoyer vers des moyens 28 de photodétection. Les moyens 25, représentés sous la forme d'un cube séparateur, peuvent être aussi du type montage fibré, où la même fonction est assurée par un multiplexeur dichroïque à deux voies.

De préférence, les moyens de pompage 8 sont constitués par une diode laser. Les moyens optiques (lentilles) 12, 14 peuvent être ou bien des lentilles simples, ou bien une lentille de type GRIN, ou toute autre association de composants optiques, permettant de focaliser le faisceau de pompage au sein du milieu actif laser 10.

Le milieu amplificateur laser (solide, monolithique) peut être par exemple constitué d'un matériau de base diélectrique choisi parmi $Y_3Al_5O_{12}$, $LaMgA_{11}O_{19}$, $YVO_4$, $Y_2SiO_5$, $YLiF_4$ ou $GdVO_4$ et être dopé avec des ions de néodyme (Nd, pour une émission de 1,06 µm), d'erbium (Er, pour une émission autour de 1,5 µm), de thulium (Tm, pour une émission autour de 2 µm), d'holmium (Ho, pour une émission autour de 2 µm), ou avec un codopage d'ions erbium et ytterbium (Er+Yb, pour une émission autour de 1,5 µm), ou avec un codopage de thulium et d'holmium (Tm+Ho, pour une émission autour de 2 µm).

Le milieu amplificateur est celui d'un microlaser. Un tel dispositif permet d'émettre un faisceau de faible divergence, très circulaire, monomode ($TEM_{00}$) et permet, de plus, l'emploi d'une optique simple pour le collimater (ce qui est impossible avec une diode laser). On utilise alors une optique fixe pour rendre le faisceau parallèle.

La portée d'un tel dispositif laser est beaucoup plus importante que celle des dispositifs existants, notamment ceux mettant en oeuvre une diode, pour une puissance d'émission laser inférieure ou égale au seuil de sécurité oculaire déterminé par les normes en vigueur.

L'élément modulant 20 du faisceau laser peut être du type piézoélectrique ou électro-optique, et peut être, comme illustré sur la figure 1, inséré dans la cavité microlaser. Des électrodes 22, 24 constituent en quelque sorte l'armature d'un condensateur plan dans lequel est placé l'élément modulant 20.

L'élément électro-optique peut être constitué, par exemple, d'un des éléments suivants : $LiTaO_3$, ou $KH_2PO_4$ (KDP), ou $KD_2PO_4$, ou $NH_4H_2PO_4$ (ADP), ou Quartz, ou CuCl, ou ZnS, ou semiconducteurs tels que GaAs, ou $LiNbO_3$, ou GaP, ou $BaTiO_3$.

Pour un élément piézoélectrique, on peut choisir par exemple des matériaux ferroélectriques comme $BaTiO_3$, $LiTaO_3$, ou du $La_2Ga_5SiO_{14}$.

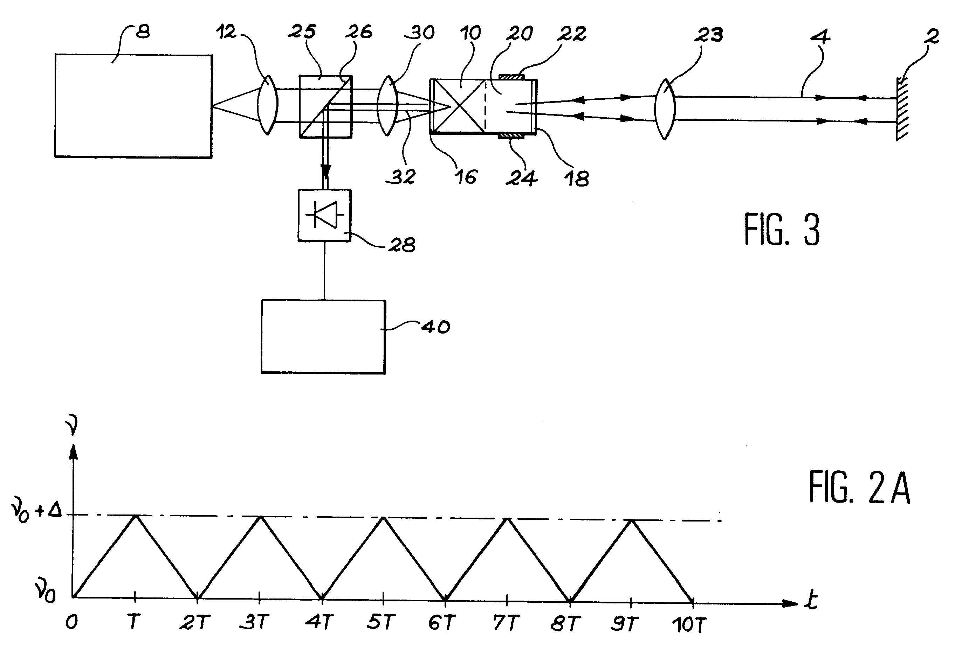

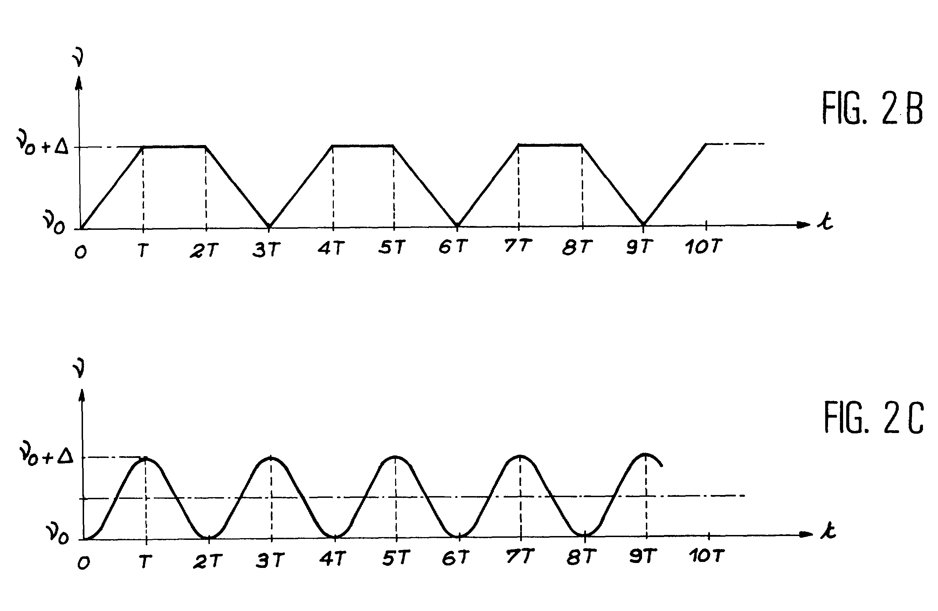

L'élément modulant permet de réaliser un balayage de la fréquence optique, par exemple un balayage linéaire du type de ceux dont les évolutions temporelles sont représentées sur les figures 2A, 2B, 2C.

Le balayage en fréquence est obtenu en appliquant une tension de modulation sur les électrodes 22, 24, qui permettent de créer un champ électrique E dans l'élément modulant.

Si l'élément modulant est électro-optique, la présence du champ E induit une variation de l'indice de réfraction, et donc une modification du chemin optique nL (où n est l'indice optique du milieu et L sa longueur physique) de la cavité. Si l'on appelle :

- $\nu_0$ la fréquence initiale d'émission du laser,
- $\Delta$ l'excursion en fréquence,
- $n_0L_0$ le chemin optique initial dans la cavité,
- $\delta(nL)$ la variation du chemin optique sous l'effet du signal de modulation,

alors, le balayage en fréquence $\Delta$ est égal :

$$\Delta = \nu_o \frac{\delta(nL)}{n_0 L_0}$$

Si $F_M = 1/(2T)$ est la fréquence de modulation, on constate que le facteur de qualité de la cavité est modulé à la fréquence $F_M$.

Dans le cas d'un élément piézoélectrique la formule ci-dessus est valable, avec L qui est fonction du champ électrique (le champ E induit une déformation de la longueur de la cavité).

Le sous-ensemble de réception comprend :

- les moyens optiques 23, qui permettent la réception de la lumière laser réfléchie par l'objet 2,
- les moyens 25 de recombinaison du faisceau de référence 26 et du faisceau de mesure,
- un ensemble de détection comportant par exemple un détecteur photoélectrique 28.

Le fonctionnement du dispositif décrit va maintenant être expliqué.

Puisque la cible 2 renvoie de la lumière à l'intérieur du laser, on prend en compte sa contribution à la réflectivité $r_2$ du miroir de sortie 18. Plus précisément, il y a une interférence, dans la cavité, entre la lumière provenant de la cible et l'oscillation laser, et cet effet peut être pris en compte dans la réflectivité du miroir de sortie 18. Celui-ci peut donc être considéré comme un miroir de réflectivité équivalente $r_2(\nu)$ :

$$r_2(\nu) = \frac{r_{2S} + r_{2ext} \cdot \exp\left[-j2\pi\nu\tau\right]}{1 + r_{2S} r_{2ext} \exp\left[-j2\pi\nu\tau\right]} \ ,$$

où $\nu_L$ est la fréquence optique de l'émission laser, et $\tau$ est le temps de vol dans la cavité.

Plus précisément, on peut écrire :

$$\tau = \frac{2(Z - L)}{v} \ ,$$

où $v$ est la vitesse de la lumière dans la cavité.

En télémétrie et vélocimétrie laser, on a en général $r_{2ext} \ll r_{2S}$, ce qui permet de réaliser un développement limité de $r_2(\nu)$ :

$$r_2(\nu) \cong r_{2S} + (1 - r_{2S}^2) \, r_{2ext} \cdot \exp(-2\pi j\nu\tau).$$

Cette expression peut encore se mettre sous la forme :

$$r_2(\nu) = |r_2| \exp(-j\phi_r),$$

où

$$\begin{cases} |r_2| = r_{2S}\left[1 + K_{ext} \cdot \cos(2\pi\nu\tau)\right] \\ \text{et} \\ \phi_r = K_{ext} \cdot \sin(2\pi\nu\tau) \end{cases} \ ,$$

et où on définit :

$$K_{ext} = \frac{r_{2ext}}{r_{2s}}\left(1 - |r_{2s}|^2\right).$$

Ces formules indiquent que la présence de la cible dans le trajet optique du faisceau laser induit une modulation du coefficient de réflexion $|r_2|$ et de la phase $\phi_r$ du miroir équivalent. On peut montrer que la perturbation sur la fréquence d'émission est négligeable dans le cas du microlaser (ceci est faux avec une diode laser, car on a alors : $\alpha \neq 0$) ; on a en effet, en télémétrie, une réflectivité $r_{2ext}$ (qu'on peut appeler "effective" parce qu'elle prend en compte plusieurs effets, en particulier la diffusion sur la cible et l'absorption dans le milieu de propagation) variant sensiblement de $10^{-1}$ à $10^{-6}$ ; en prenant $r_{2S}=0,98$ on a, selon la dernière expression ci-dessus, un coefficient de couplage $K_{ext}$ variant de $4.10^{-3}$ à $4.10^{-8}$.

La variation de la fréquence d'émission laser s'écrit :

$$\Delta v_{max} = \frac{\phi_r}{2\pi. \tau_\ell} = \frac{K_{ext}}{2\pi. \tau_\ell}$$

en prenant $\tau_\ell=0,3$ ns (valeur typique) on obtient, avec les données numériques précédentes, une variation $\Delta v_{max}$ comprise entre 21,22 Hz à 2,12 MHz, ce qui peut être considéré comme négligeable comparé au balayage de plusieurs dizaines de gigahertz (typiquement 10 GHz) réalisé en télémétrie FMCW.

La variation de l'intensité laser, quant à elle, n'est pas négligeable en dépit des faibles valeurs de $K_{ext}$. En effet, le caractère résonnant du microlaser autour du régime stationnaire permet d'amplifier substantiellement les petites variations de réflectivité du miroir 18 dues à la présence d'un objet sur le chemin optique du faisceau laser émis.

En introduisant la réflectivité équivalente $r_2(v)$ on peut écrire le facteur de qualité Q du résonateur optique de la cavité microlaser :

$$Q = \frac{2\pi v. \, n\ell}{C\left[\alpha_s\ell \, - \, \ln\left|r_1 r_2(v)\right|\right]},$$

ce qu'on peut encore écrire :

$$Q = Q_o \, [1 - \beta.\cos(2\pi v\tau)],$$

où $Q_o$ est le facteur de qualité des miroirs 16 et 18 seuls, sans la présence de la cible 2 :

$$Q_o = 2\pi v \, \frac{n\ell}{C\left[\alpha_s\ell \, - \, \ln\left(r_1 r_{2s}\right)\right]},$$

et où :

- $v$ est la fréquence d'émission laser,
- $n$ est l'indice de réfraction du milieu amplificateur,
- $\alpha_s$ est le coefficient de pertes autres que par les miroirs, par exemple par diffusion par des imperfections dans le cristal laser. Celles-ci sont généralement faible si le cristal est de bonne qualité : $\alpha_s \ll 0,001$ cm$^{-1}$.
- $\ell$ est la longueur de la cavité laser.
- $\beta = \dfrac{K_{ext}}{\ln(r_1 r_{2S}) - \alpha_s\ell}$

Il est possible en outre d'introduire des éléments optiques entre la cible 2 et le miroir de sortie 18. Dans ces conditions la définition des $\beta$ donnée ci-dessus est alors modifiée.

Par exemple, si le faisceau laser est collimaté par une lentille simple, placée à la distance focale F du miroir 18, on démontre que le coefficient $\beta$ s'écrit :

$$\beta = \left(\frac{\tau\rho}{R_{2S}}\right)^{1/2} \frac{\lambda}{a} \frac{F}{z - F} \text{ si } Z \gg F,$$

où :

- $\tau$ est la transmission de l'optique et du milieu de propagation à $\lambda$,

- $\rho$ est l'Albedo de la cible diffusante,
- $R_{2S}$ est le coefficient de réflexion, en intensité, du miroir 18 ($R_{2S}=r_{2S}^2$),
- F est la focale de la lentille mince,
- z est la distance de la cible 2 au miroir 18,
- a est le diamètre du faisceau laser émis au niveau du miroir 18.

On peut montrer que le coefficient de qualité Q est une fonction du temps, en particulier lorsque la fréquence $\nu$ du laser est fonction du temps et lorsque la cible est fixe, ou en mouvement.

Lorsque la cible est en mouvement et que l'on réalise une modulation de fréquence, le facteur de qualité a pour expression :

$$Q(t) \; = \; Q_o\Big[1 \; - \; \beta \; \cos\big(2\pi\nu(t)\tau(t)\big)\Big].$$

Si on considère le cas particulier où la vitesse du mobile est uniforme et la modulation est en forme de double rampe, alors, selon le schéma de la figure 2A :

$$\begin{cases} \tau(t) \; = \; \dfrac{2\big(Z_0 \; - \; L \; + \; V.\, t\big)}{v} \; = \; \tau_0 \; + \; \dfrac{2V}{v}\,t \\[2mm] \nu(t) \; = \; \nu_0 \; + \; \Delta\,\dfrac{t}{T} \qquad\qquad 0 \; < \; t \; < \; T \\[2mm] \nu(t) \; = \; \nu_0 \; + \; 2\Delta \; - \; \dfrac{\Delta}{T}\,t \qquad T \; < \; T \; < \; 2T \end{cases}$$

en remplaçant ces expressions dans celle de Q(t) donnée ci-dessus, on a les relations suivantes :

- Pour 0<t<T

$$Q(t) \; = \; Q_0\Big\{1 \; - \; \beta \; \cos\Big[\nu_0\tau_0 \; + \; \big(F_D \; + \; F_\tau\big)t \; + \; \frac{\Delta}{T}\frac{2V}{v}\,t^2\Big]\Big\}$$

Pour T<t<2T

$$Q(t) \; = \; Q_0\Big\{1 \; - \; \beta \; \cos\Big[\nu_0\tau_0 \; + \; 2\Delta\tau_0 \; + \; \big(F_D \; - \; F_\tau\big)t \; + \; \frac{2V}{v}2\Delta t \; - \; \frac{\Delta}{T}\frac{2V}{v}\,t^2\Big]\Big\}$$

où $FD = \frac{2V}{\lambda}$ (fréquence associée à la vitesse de la cible),
et $F_\tau = \frac{\Delta\tau_0}{T}$ (fréquence associée au temps de vol $\tau_0$).

Moyennant les hypothèses :

$$v >> V,$$

$$\Delta << \nu_0,$$

toujours vérifiées en pratique, on a :

$$Q(t) = Q_0\{1 - \beta \cos[\varphi_0 + 2\pi F_1.t]\}, \quad 0 < t < T$$

$$Q(t) = Q_0\{1 - \beta \cos[\varphi'_0 + 2\pi F_2.t]\}, \quad T < t < 2T$$

où $F_1 = F_D + F_\tau$ et $F_2 = F_D - F_\tau$

Un traitement du signal classique permet de déterminer la vitesse V et la distance Z à partir des fréquences $F_1$ et $F_2$. On a en effet, à partir des relations ci-dessus :

$$V = \frac{F_1 + F_2}{2} \frac{\lambda}{2}$$

et

$$Z = \frac{F_1 - F_2}{2} \frac{T}{\Delta} \frac{v}{2}$$

Les figures 2B et 2C donnent d'autres formes de modulation. Il est possible de trouver des formules équivalentes à celles données ici en utilisant le même raisonnement.

Pratiquement, le moyens de pompage 8 permettent de créer une inversion de population $N_0$ dans le milieu amplificateur 10.

Les miroirs 16, 18, dont l'association constitue un résonateur optique de facteur de qualité Q, permettent de sélectionner un mode de propagation. L'inversion de population minimale pour avoir une émission laser est notée $N_{th}$. Pour $N_0 > N_{th}$, il y a une oscillation laser entretenue dans l'amplificateur : un faisceau laser 4 est émis à travers le miroir 18. Simultanément, une tension de modulation est appliquée aux électrodes situées de part et d'autre de l'élément 20 de modulation. Le faisceau émis 4 présente donc une fréquence, variable dans le temps en fonction de la tension appliquée à l'élément de modulation 20.

Sur son trajet, le faisceau 4 est d'abord collimaté par l'optique 23, puis séparé par l'intermédiaire du moyen optique 25 de séparation. Une partie 26 du faisceau sert de référence et va sur le moyen de détection 28. L'autre partie du faisceau est envoyée sur la cible. Le faisceau de mesure est diffusé ou réfléchi par cette dernière. Une fraction de l'énergie se propage vers le moyen optique de réception 23 qui renvoie le faisceau de mesure vers l'amplificateur optique constitué du matériau amplificateur 10 et des miroirs 16, 18. Après amplification dans cette structure, le faisceau revient en direction du moyen optique 25, et une partie du signal amplifié est envoyé sur le moyen de détection 28. Le résultat de l'interférence, dans le milieu actif 10, entre l'oscillation laser modulée en fréquence et le faisceau réfléchi ou diffusé par la cible, permet d'extraire l'information sur la vitesse et sur la position de la cible 2.

Dans le cas d'un balayage en fréquence ayant la forme représentée sur la figure 2A, la loi de modulation linéaire, sur chaque intervalle de temps, de la fréquence optique s'écrit :

$$\begin{cases} v(t) = v_0 + \frac{\Delta}{T}.t \text{ pour } mT. < t < (m+1).T \\ v(t) = v_0 + 2\Delta - \frac{\Delta}{T}.t \text{ pour } (m+1).T < t < (m+2)T \\ m = 0, 1, 2, \ldots \end{cases}$$

Le signal photoélectrique s'écrit, après filtrage et conversion du photocourant :

$$\begin{cases} S_{AC}(t) = I_0 G(F_D + F_\tau) \cdot \cos\left[2\pi(F_D + F_\tau) \cdot t\right] \text{ pour } mT < t < (m + 1)T \\ \text{et} \\ S_{AC}(t) = I_0 G(F_D - F_\tau) \cdot \cos\left[2\pi(F_D - F_\tau) \cdot t\right] \text{ pour } (m + 1)T < t < (m + 2)T \\ m = 0, 1, 2, \ldots \end{cases}$$

où :

- la fréquence $F_D = \frac{2V}{\lambda}$ est égale à la fréquence Doppler $\frac{2V}{\lambda}$ associé à la vitesse V du mobile et à l'onde électromagnétique de longueur d'onde $\lambda$. La vitesse V représente en fait la projection du vecteur vitesse $\vec{V}$ sur l'axe optique du microlaser.
- $F_\tau$ est la fréquence de LA modulation du facteur de qualité de la cavité microlaser, provoquée par la présence d'une cible à la distance Z et le balayage en fréquence, par exemple selon la représentation de la figure 2. Cette fréquence est proportionnelle au temps de vol "$\tau$", et donc à la distance à mesurer :

$$F_\tau = \Delta \frac{\tau}{T} .$$

- $I_0$ est l'intensité lumineuse injectée dans le laser et provenant de la cible (en watt).
- $G(F_D \pm F_\tau)$ est le gain de la détection autodyne.
- T est la récurrence de la modulation.
- C est la vitesse de la lumière (égale à $3.10^8$ m.s$^{-1}$).
- $\lambda$ est la longueur d'onde.
- $\Delta$ est l'excursion de la modulation.

Le traitement du signal permet de mesurer les fréquences $F_1$ et $F_2$ définies par les relations suivantes :

$$\begin{cases} F_1 = F_D + F_\tau \text{ pour } mT < t < (m + 1)T \\ F_2 = F_D - F_\tau \text{ pour } (m + 1)T < t < (m + 2)T \end{cases}$$

La mesure de $F_1$ et $F_2$ permet de déterminer conjointement la distance (Z) et la vitesse (V) de l'objet selon les formules :

$$\begin{cases} Z = \dfrac{F_1 + F_2}{2} \cdot \dfrac{T}{\Delta} \cdot \dfrac{C}{2} \\ V = \dfrac{F_1 + F_2}{2} \cdot \dfrac{\lambda}{2} \end{cases}$$

Le traitement du signal peut être réalisé à l'aide des moyens 40, par exemple un ordinateur conventionnel spécialement programmé.

Des fonctions d'évolution temporelle de la fréquence autres que celle de la figure 2A sont possibles (voir figures 2B, 2C), et on peut recalculer Z et V en fonction des évolutions temporelles en suivant le même type de raisonnement que celui décrit ci-dessus.

Un autre mode de réalisation de l'invention est illustré sur la figure 3, sur laquelle des références numériques identiques à celles de la figure 1 désignent des éléments identiques ou correspondants.

Dans ce second mode de réalisation, l'élément séparateur 25 est situé entre la source de pompage 8 et le microlaser 10. Dans le cas d'un cube séparateur, celui-ci est de préférence du type dichroïque en ce sens qu'il laisse passer sans modification notoire le faisceau de pompe à la longueur d'onde $\lambda$ mais réfléchi de façon efficace le faisceau 32 (à la longueur d'onde $\lambda$) vers les moyens de détection 28. Par un traitement diélectrique adéquat de l'interface constituée par la face diagonale 26 du cube 25 il est possible de réaliser la fonction de séparation des faisceaux.

Le microlaser émet un faisceau laser 4 en direction de la cible 2 ainsi qu'un faisceau laser 32 en direction des moyens séparateurs 25 et des moyens de détection 28. Ainsi, lorsque le pompage optique fourni par les moyens de pompage 8 permet de dépasser le seuil laser, le microlaser émet deux faisceaux lasers. Le seuil de pompage pour l'émission des faisceaux dépend non seulement du matériau amplificateur 10 mais aussi des miroirs 16 et 18.

Les faisceaux du microlaser sont respectivement émis par les première et deuxième faces 16, 18 du laser et sont désignés par premier 4 et deuxième 32 faisceaux. Les premier et deuxième faisceaux 4, 32, colinéaires, sont émis dans des sens opposés.

Comme dans le premier mode de réalisation, les moyens 23 de focalisation et de collimation permettent de focaliser la lumière réfléchie, ou diffusée, par la cible 2, dans le microlaser, qui constitue également un récepteur et un amplificateur pour la lumière (diffusée ou réfléchie) réémise par la cible (signal de mesure). Les moyens 28 permettent de détecter un signal résultant de l'interférence, dans la cavité microlaser, entre l'oscillation laser modulée et le signal de mesure.

Dans le cas où l'élément séparateur 25 est un cube, la face inclinée du cube 25, qui permet de diriger le faisceau de référence en direction de l'élément de détection 28, est sensiblement transparente pour la longueur d'onde $\lambda_P$ (par exemple, environ 0,8 µm) de la lumière de pompage et réfléchissante pour la longueur d'onde $\lambda$ émise par le microlaser.

Dans le dispositif de la figure 3, la lumière réfléchie ou diffusée par la cible n'atteint par directement les moyens de détection 28. Cette lumière est reçue par le microlaser et est arrêtée pour l'essentiel par le miroir 16 formant la deuxième face du microlaser. Les moyens de détection 28 sont ainsi, dans une large mesure, isolés optiquement de la lumière provenant de la cible. Réciproquement, le microlaser est peu perturbé par la lumière diffusée et réfléchie sur le détecteur.

En fait, le montage de la figure 3 permet d'éviter les problèmes de diaphonie entre l'émission et la réception. En effet, dans le montage de la figure 1, une partie du signal provenant de la cible peut se réfléchir à la surface du miroir 18 et, par autocollimation, venir se mélanger au signal de modulation détecté par les moyens de détection 28.

La détermination de la vitesse et de la distance de la cible est effectuée, dans le cadre de ce second mode de réalisation, de la même manière que pour le premier mode de réalisation, et avec les mêmes équations.

Les microlasers et leurs cavités ont été représentés, dans les deux modes de réalisation ci-dessus, en cavité plan-plan, en limite de stabilité. Il est également possible de réaliser l'un des miroirs, par exemple le miroir d'entrée 16, sous la forme d'un miroir courbe : on obtient ainsi une cavité plan concave, stable. Il est également possible d'utiliser une cavité dans laquelle les deux miroirs d'entrée et de sortie, 16, 18, sont courbes : on obtient encore une cavité stable. L'utilisation d'une cavité stable permet d'abaisser substantiellement le seuil d'excitation du laser $N_{th}$. Il est alors possible d'utiliser une diode de pompage 8 de moindre puissance, ce qui induit un coût de fabrication réduit.

Dans l'invention exposée ci-dessus, le laser se comporte à la fois comme émetteur d'un rayonnement cohérent et comme récepteur, démodulateur et amplificateur optique du signal provenant de la cible. Le phénomène de démodulation optique est assuré par le laser lui-même, en ce sens qu'il est capable de moduler sa propre intensité à la fréquence $F_D$ et $F_\tau$. Les moyens de détection ont donc un rôle secondaire, dans la présente invention, contrairement aux autres dispositifs télémétriques, où les moyens de détection jouent un rôle capital, en particulier dans le cas de la télémétrie impulsionnelle et de la télémétrie par comparaison de phase.

La présente invention permet de mettre en oeuvre une détection autodyne dans de bonnes conditions, en utilisant une structure de type microlaser. Elle permet également d'avoir un télémètre ayant une portée au moins 100 fois supérieure aux télémètres utilisant une diode laser, communément disponible sur le marché. Enfin, du fait de l'utilisation d'un mécanisme de résonance propre, le dispositif à microlaser selon l'invention permet d'obtenir un rapport signal/bruit élevé par rapport aux dispositifs de l'art antérieur.

Un procédé de réalisation d'une cavité microlaser, incluant un élément de modulation, va maintenant être décrit.

Une première étape consiste à choisir le matériau actif laser. On a déjà décrit, ci-dessus, des matériaux possibles pour le milieu amplificateur laser. La longueur d'onde d'émission est un critère qui permet à l'homme du métier de choisir entre ces différents matériaux.

La deuxième étape est une étape de conditionnement du cristal laser choisi : on l'oriente et on le découpe en lames d'épaisseur comprise entre 0,5 et 5 mm.

Dans une troisième étape, les lames sont rodées et polies, ce qui permet d'enlever la couche d'écrouissage superficielle due à la découpe, et d'autre part de ramener l'épaisseur des lames à une épaisseur légèrement supérieure à la spécification du microlaser. Les lames rodées et rapprochées de l'épaisseur finale sont polies sur les deux faces avec une qualité optique. La découpe, le rodage et le polissage sont faits avec des procédés connus, utilisant des machines connues de l'homme du métier.

L'élément de modulation 20 est ensuite choisi, préparé et découpé, pour le ramener à l'épaisseur voulue. L'assemblage de cet élément avec le milieu actif laser peut être réalisé par collage de ces deux éléments.

Dans une cinquième étape, on procède au dépôt des miroirs d'entrée et de sortie. Il s'agit de préférence de miroirs dichroïques, obtenus par un dépôt de multicouches diélectriques.

Ensuite, on procède à la découpe des lames pour obtenir des puces microlasers individuelles, chaque puce pouvant être utilisée dans un dispositif de vélocimétrie et de télémétrie selon l'invention. Les plaquettes comportant les miroirs, le milieu actif laser, les moyens de modulation sont découpées par une scie diamantée (du type de celles qui sont utilisées en micro-électronique pour la découpe des puces Si), pour obtenir des puces lasers de quelques mm$^2$ de section.

Une étape supplémentaire peut être prévue au cas où l'on souhaite fabriquer, sur l'une ou l'autre face, une microlentille afin de réaliser une cavité stable. Ainsi, on peut graver directement les microlentilles sur le matériau laser, en utilisant des technologies couramment utilisées en micro-électronique. Un autre mode de réalisation de cette étape consiste à réaliser d'abord les microlentilles sur un autre matériau (résine photosensible, silice, ...) et à les hybrider ensuite (par exemple par collage avec une colle optique) avec la face polie du matériau laser. L'article de A. EDA et al., CLEO'92, paper CWG 33, page 282, 1992 (conf. on Laser and Electrooptics, Anaheim, USA, May 1992) donne une méthode pour réaliser un réseau de microlentilles en un matériau transparent (silice,...) sur la surface d'un matériau laser. Les dimensions typiques des microlentilles obtenues sont :

- diamètre : de 100 à quelques centaines de microns,
- rayon de courbure : de quelques centaines de micromètres à quelques millimètres.

**Revendications**

1. Dispositif de vélocimétrie et de télémétrie laser, à détection cohérente, comportant :

   - un microlaser solide monolithique (16, 10, 18) à émission continue, comportant un milieu actif laser (10) et une cavité microlaser (16, 18),
   - des moyens (20, 22, 24) pour moduler une fréquence optique d'un faisceau émis par le microlaser,
   - des moyens (28) pour délivrer un signal dépendant :

     * d'une part de la fréquence Doppler $F_D = \frac{2V}{\lambda}$, où $\lambda$ est la longueur d'onde d'émission du microlaser et V la vitesse d'une cible (2) à détecter,
     * d'autre part d'une fréquence de modulation $F\tau$ provoquée par l'interférence, dans la cavité, de l'oscillation laser modulée en fréquence et du signal provenant d'une cible (2) placée à la distance Z.

2. Dispositif de vélocimétrie et de télémétrie, du type à détection cohérente, en particulier selon la revendication 1, comportant :

   - un microlaser solide monolithique (10) à émission continue,
   - des moyens (20) de modulation de la fréquence optique d'un faisceau émis par le microlaser,
   - des moyens (23) pour transmettre le faisceau (4) émis par le microlaser en direction d'une cible (2), pour recevoir un signal de mesure en provenance de la cible et pour transmettre ce signal de mesure vers le milieu actif laser,
   - des moyens de détection (28) d'un signal d'interférence, dans le microlaser, entre l'oscillation laser dans la cavité et le signal de mesure.

3. Dispositif selon la revendication 2, comportant en outre des moyens (25) pour prélever, sur le faisceau laser (4), émis par le microlaser, un faisceau de référence.

4. Dispositif de vélocimétrie et de télémétrie du type à détection cohérente, en particulier selon la revendication 1, comportant :

   - un microlaser solide monolithique à émission continue avec une première (16) et une deuxième (18) faces d'émission opposées, aptes à émettre respectivement un premier (4) et un deuxième (32) faisceaux,
   - des moyens (20) pour moduler la fréquence optique des premier et deuxième faisceaux,
   - des moyens (23) pour transmettre le premier faisceau (4) émis par le microlaser en direction d'une cible (2), pour recevoir un signal de mesure en provenance de la cible et pour transmettre ce signal de mesure vers le milieu actif laser,
   - des moyens (28) pour détecter un signal résultant de l'interférence entre l'oscillation laser dans la cavité et le signal de mesure.

5. Dispositif selon l'une des revendications 1 à 4, la cavité microlaser étant stable.

**6.** Dispositif selon l'une des revendications 1 à 5, les moyens de modulation (20) de la fréquence optique du faisceau laser comportant un élément électro-optique.

**7.** Dispositif selon l'une des revendications 1 à 5, les moyens de modulation (20) de la fréquence optique du faisceau laser comportant un élément piézoélectrique.

**8.** Dispositif selon l'une des revendications 1 à 7, comportant en outre des moyens de traitement pour déterminer des grandeurs caractéristiques de la vitesse et de la position de la cible.

FIG.1

EP 0 869 374 A1

EP 0 869 374 A1

FIG. 3

FIG. 2A

FIG. 2 B

FIG. 2 C

EP 0 869 374 A1

**Office européen des brevets**

**RAPPORT DE RECHERCHE EUROPEENNE**

Numéro de la demande

EP 98 40 0753

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| A | GB 2 251 150 A (SECR DEFENCE) 24 juin 1992<br>* le document en entier *<br>--- | 1 | G01S17/32<br>G01S17/58 |
| A | OKAMOTO S ET AL: "ULTRAHIGHLY SENSITIVE LASER-DOPPLER VELOCITY METER WITH A DIODE-PUMPED ND:YVO4 MICROCHIP LASER"<br>REVIEW OF SCIENTIFIC INSTRUMENTS,<br>vol. 66, no. 5, mai 1995,<br>pages 3116-3120, XP000507796<br>* le document en entier *<br>----- | 1 | |

**DOMAINES TECHNIQUES RECHERCHES (Int.Cl.6)**

G01S
H01S

Le présent rapport a été établi pour toutes les revendications

| Lieu de la recherche | Date d'achèvement de la recherche | Examinateur |
|---|---|---|
| LA HAYE | 10 juillet 1998 | Zaccà, F |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)